# EUROPEAN PATENT APPLICATION

(11) **EP 4 465 571 A1**
(43) Date of publication of application: **20.11.2024**
(21) Application number: 22919367.7
(22) Date of filing: 11.01.2022
(51) Int. Cl.: H04L 5/00

(54) **INFORMATION REPORTING METHOD AND APPARATUS, INFORMATION RECEIVING METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN); LI, Junli, Beijing 100085 (CN); LI, Yuanyuan, Beijing 100085 (CN)
(74) Representative: Stöckeler, Ferdinand
(86) International application number: PCT/CN2022/071422
(87) International publication number: WO 2023/133701

(57) **Abstract**

The present application relates to the field of mobile communication and discloses an information reporting method and apparatus, an information receiving method and apparatus, a device, and a storage medium. The method comprises: a terminal sends channel state information to a network device, the channel state information comprising a time domain parameter and/or a Doppler domain parameter. The terminal reports the channel state information comprising the time domain parameter and/or the Doppler domain parameter to the network device, where the time domain parameter and/or the Doppler domain parameter may indicate a coherence time of the channel, so as to facilitate determination of a time domain correlation of the channel on the basis of the determined coherence time of the channel; also, signaling overhead is reduced while CSI feedback accuracy is improved.

## Description

### FIELD

The present disclosure relates to the field of mobile communication, and more particularly to an information reporting method and apparatus, an information receiving method and apparatus, a device, and a storage medium.

### BACKGROUND

In the mobile communication technology, the terminal will feed back the channel state information (CSI) to the network device to inform the network device of the channel measurement result of the terminal. When the terminal is moving at a medium or high speed, if the period of CSI feedback by the terminal is too long, the delay of CSI feedback is long, which leads to poor accuracy of CSI feedback. However, if the period of CSI feedback is too short, the signaling overhead of CSI feedback is large.

### SUMMARY

Embodiments of the present disclosure provide an information reporting method and apparatus, an information receiving method and apparatus, a device, and a storage medium, which determine the time domain correlation of a channel based on the determined coherence time, thus improving CSI feedback accuracy while reducing signaling overhead. The technical solution is as follows.

According to an aspect of embodiments of the present disclosure, an information reporting method is provided, and the method is executed by a terminal and includes sending channel state information to a network device, and the channel state information includes a time domain parameter and/or a Doppler domain parameter.

According to an aspect of embodiments of the present disclosure, an information receiving method is provided, and the method is executed by a network device and includes receiving channel state information sent by a terminal, and the channel state information includes a time domain parameter and/or a Doppler domain parameter.

According to an aspect of embodiments of the present disclosure, an information reporting apparatus is provided, and the apparatus includes a sending module configured to send channel state information to a network device, and the channel state information includes a time domain parameter and/or a Doppler domain parameter.

In some embodiments, the time domain parameter and/or the Doppler domain parameter include at least one of: a Doppler shift; a shift coefficient for the Doppler shift; a Doppler spread; and a first spread coefficient for the Doppler spread.

In some embodiments, the time domain parameter include at least one of: a Doppler delay; a first delay coefficient for the Doppler delay; an average delay; a second delay coefficient for the average delay; a delay spread; and a second spread coefficient for the delay spread.

In some embodiments, the channel state information is carried in a precoding matrix indicator (PMI).

In some embodiments, the apparatus further includes that the sending module is configured to send first information to the network device, and the first information includes at least one of a CSI-RS resource indicator (CRI), a rank indicator (RI), a channel quality indicator (CQI) and a layer indicator (LI).

In some embodiments, the channel state information exists independently of a PMI.

In some embodiments, the apparatus further includes that the sending module is configured to send second information to the network device, and the second information includes at least one of a CRI, the PMI, a RI, a CQI and a LI.

In some embodiments, the sending module is further configured to send channel state information corresponding to each wave beam of a plurality of wave beams to the network device.

In some embodiments, the sending module is further configured to send channel state information based on a broadband to the network device; or, send channel state information based on a narrowband to the network device.

In some embodiments, a frequency domain unit corresponding to the channel state information is the same as a frequency domain unit corresponding to a phase and/or an amplitude of the narrowband; or, a frequency domain unit corresponding to the channel state information is different from a frequency domain unit corresponding to a phase and/or an amplitude of the narrowband.

In some embodiments, the sending module is further configured to send the channel state information to the network device after sending the first information to the network device and in case that a preset condition is met.

In some embodiments, the sending module is further configured to send the channel state information to the network device after sending the second information to the network device and in case that that a preset condition is met.

In some embodiments, the preset condition includes at least one of: at least one of the CRI and the RI being unchanged; and it not being time to send at least one of the CRI, PMI, RI, CQI and LI.

In some embodiments, the channel state information further includes at least one of the following corresponding to the time domain parameter: a channel state information reference signal CSI-RS identifier, a CSI-RS resource set identifier and a transmission sequence number corresponding to a CSI-RS.

In some embodiments, the channel state information also includes at least one of the following corresponding to the Doppler domain parameter: the channel state information reference signal CSI-RS identifier, the CSI-RS resource set identifier and the transmission sequence number corresponding to the CSI-RS.

According to an aspect of the present disclosure, an information receiving apparatus is provided, which includes a receiving module configured to receive channel state information sent by a terminal, and the channel state information includes a time domain parameter and/or a Doppler domain parameter.

In some embodiments, the Doppler domain parameter include at least one of: a Doppler shift; a shift coefficient for the Doppler shift; a Doppler spread; and a first spread coefficient for the Doppler spread.

In some embodiments, the time domain parameter include at least one of: a Doppler delay; a first delay coefficient for the Doppler delay; an average delay; a second delay coefficient for the average delay; a delay spread; and a second spread coefficient for the delay spread.

In some embodiments, the channel state information is contained in a precoding matrix indicator (PMI).

In some embodiments, the receiving module is configured to receive first information sent by the terminal, and the first information includes at least one of a CRI, a RI, a CQI and a LI.

In some embodiments, the channel state information exists independently of a PMI.

In some embodiments, the receiving module is configured to receive second information sent by the terminal, and the second information includes at least one of a CRI, the PMI, a RI, a CQI and a LI.

In some embodiments, the receiving module is configured to receive channel state information corresponding to each wave beam of a plurality of wave beams sent by the terminal.

In some embodiments, the receiving module is configured to: receive channel state information based on a broadband sent by the terminal; or, receive channel state information based on a narrowband sent by the terminal.

In some embodiments, a frequency domain unit corresponding to the channel state information is the same as a frequency domain unit corresponding to a phase and/or an amplitude of the narrowband; or, a frequency domain unit corresponding to the channel state information is different from a frequency domain unit corresponding to a phase and/or an amplitude of the narrowband.

In some embodiments, the receiving module is further configured to receive the channel state information sent by the terminal after the terminal sends the first information to the network device and in case that a preset condition is met.

In some embodiments, the receiving module is further configured to receive the channel state information sent by the terminal after the terminal sends the second information to the network device and in case that a preset condition is met.

In some embodiments, the preset condition includes at least one of: at least one of the CRI and the RI being unchanged; and it not being time to send at least one of the CRI, PMI, RI, CQI and LI.

In some embodiments, the channel state information also includes at least one of the following corresponding to the time domain parameter: a CSI-RS identifier, a CSI-RS resource set identifier and a transmission sequence number corresponding to a CSI-RS.

In some embodiments, the channel state information also includes at least one of the following corresponding to the Doppler domain parameter: the CSI-RS identifier, the CSI-RS resource set identifier and the transmission sequence number corresponding to the CSI-RS.

According to an aspect of the present disclosure, there is provided a terminal, which includes: a processor; a transceiver connected with the processor; and a memory for storing executable instructions of the processor. The processor is configured to load and execute the executable instructions to realize the information reporting method according to the above aspect.

According to an aspect of the present disclosure, there is provided a network device, which includes: a processor; a transceiver connected with the processor; and a memory for storing executable instructions of the processor. The processor is configured to load and execute the executable instructions to realize the information receiving method according to the above aspect.

According to an aspect of the present disclosure, a computer-readable storage medium is provided, in which executable program codes are stored, and the executable program codes are loaded and executed by a processor to realize the information reporting method according to the above aspect or the information receiving method according to the above aspect.

According to an aspect of the present disclosure, there is provided a chip, which includes a programmable logic circuit and/or program instructions, and is configured to realize the information reporting method according to the above aspect or the information receiving method according to the above aspect when the chip runs on a terminal or a network device.

According to an aspect of the present disclosure, there is provided a computer program product, which is configured to realize the information reporting method according to the above aspect or the information receiving method according to the above aspect when the computer program product is executed by a processor of a terminal or of a network device.

Embodiments of the present disclosure provide an information reporting manner, in which the terminal reports the channel state information including the time domain parameter and/or the Doppler domain parameter to the network device, and the time domain parameter and/or the Doppler domain parameter can indicate the coherence time of the channel, so as to determine the time domain correlation of the channel based on the determined coherence time, thus reducing signaling overhead while improving CSI feedback accuracy.

### BRIEF DESCRIPTION OF THE DRAWINGS

In order to explain the technical solution in embodiments of the present disclosure more clearly, the drawings needed to be used in the description of embodiments will be briefly introduced below. Obviously, the drawings in the following description are only some embodiments of the present disclosure. For those ordinary skilled in the art, other drawings can be obtained according to these drawings without creative work.
Fig. 1 shows a block diagram of a communication system according to an illustrative embodiment of the present disclosure.
Fig. 2 shows a flow chart of an information reporting method according to an illustrative embodiment of the present disclosure.
Fig. 3 shows a block diagram of an information reporting apparatus according to an illustrative embodiment of the present disclosure.
Fig. 4 shows a block diagram of an information receiving apparatus according to an illustrative embodiment of the present disclosure.
Fig. 5 shows a schematic diagram of a communication device according to an illustrative embodiment of the present disclosure.

### DETAILED DESCRIPTION

In order to make the purpose, technical solution and advantage of the present disclosure more clear, embodiments of the present disclosure will be further described in detail with reference to the accompanying drawings.

Reference will now be made in detail to illustrative embodiments, examples of which are illustrated in the accompanying drawings. The following description refers to the drawings, and unless otherwise indicated, the same numbers in different drawings indicate the same or similar elements. Implementations described in the following illustrative embodiments do not represent all possible embodiments consistent with the present disclosure. Rather, they are merely examples of apparatuses and methods consistent with some aspects of the present disclosure as detailed in the appended claims.

The terms used in the present disclosure are for the purpose of describing specific embodiments only and are not intended to limit the present disclosure. The singular forms "a/an", "said" and "the" used in the present disclosure and the appended claims are also intended to include the plural forms, unless the context clearly indicates other meanings. It should also be understood that the term "and/or" as used herein refers to and includes any or all possible combinations of one or more associated listed items.

It should be understood that although the terms first, second, third, etc. may be used in the present disclosure to describe various information, these information should not be limited to these terms. These terms are only used to distinguish the same type of information from each other. For example, without departing from the scope of the present disclosure, the first information can also be called the second information, and similarly, the second information can also be called the first information. Depending on the context, for example, the word "if" used here can be interpreted as "while" or "when" or "in response to".

The application scenario of the present disclosure will be described below.

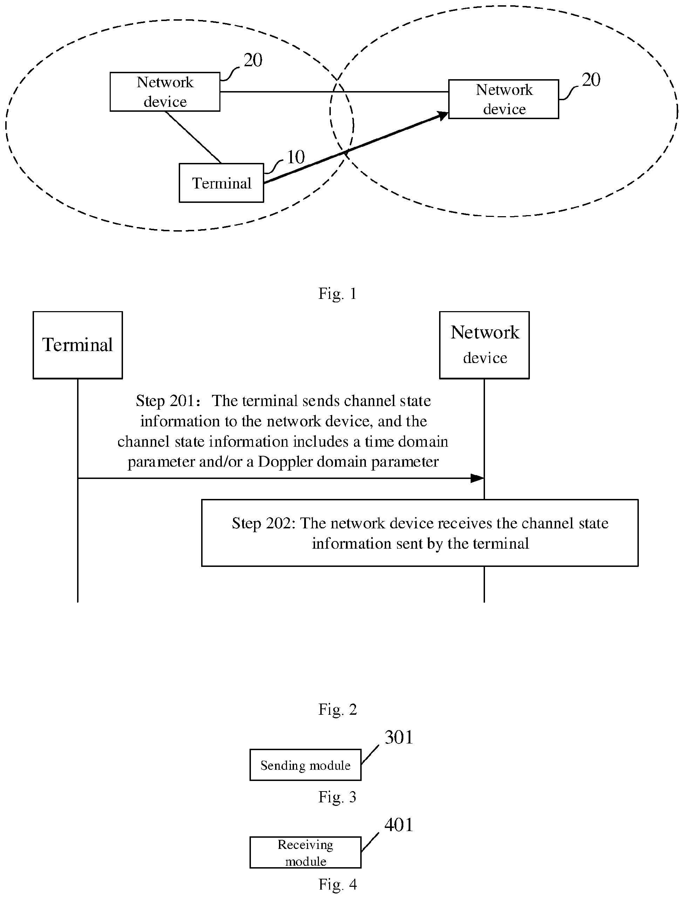

Fig. 1 shows a block diagram of a communication system according to an illustrative embodiment of the present disclosure, and the communication system may include a terminal 10 and a network device 20.

A plurality of terminals 10 usually may be provided, and one or more terminals 10 can be distributed in a cell managed by each network device 20. The terminal 10 may include various handheld devices, vehicle-mounted devices, wearable devices, computing devices or other processing devices connected to a wireless modem, as well as various forms of user equipment (UE), mobile stations (MS) and the like, which have the wireless communication function. For convenience of description, in embodiments of the present disclosure, the above-mentioned devices are collectively referred to as terminals.

The network device 20 is an apparatus deployed in an access network to provide the wireless communication function for the terminal 10. For convenience of description, in embodiments of the present disclosure, the above-mentioned apparatus providing the wireless communication function for the terminal 10 are collectively referred to as network devices. The connection between the network device 20 and the terminal 10 can be established through an air interface, so that the network device 20 and the terminal 10 communicate through the connection, and the communication includes the interaction of signaling and data. A plurality of network devices 20 can be provided, and two adjacent network devices 20 can also communicate in a wired or wireless manner. The terminal 10 can switch among different network devices 20, that is, establishing the connection with different network devices 20.

The network device 20 may include various forms of macro cells, micro cells, relay stations, access points and the like. In systems with different wireless access technologies, the names of devices with network device functions may be different, for example, in 5G NR systems, they are called gNodeB or gNB. With the evolution of communication technology, the name "network device" may change.

Fig. 2 shows a flow chart of an information reporting method according to an illustrative embodiment of the present disclosure, which can be for example applied to the terminal and the network device as shown in Fig. 1, and the method includes at least part of the following contents.

In step 201, the terminal sends channel state information to the network device, and the channel state information includes a time domain parameter and/or a Doppler domain parameter.

In embodiments of the present disclosure, the terminal and the network device can interact, and the terminal sends parameters including the time domain parameter and/or the Doppler domain parameter to the network device. The time domain parameter refers to a parameter related to time delay, and the Doppler domain parameter refers to a parameter related to Doppler shift or Doppler spread.

The terminal will perform measurement based on a channel state information-reference signal (CSI-RS) and/or a synchronization signal and PBCH block (SSB) sent by the network device, and then send the channel state information to the network device to indicate the time domain parameter and/or the Doppler domain parameter.

In step 202, the network device receives the channel state information sent by the terminal.

In embodiments of the present disclosure, the network device receives the channel state information, determines the included time domain parameter and/or Doppler domain parameter based on the channel state information, and then can determine a channel coherence time based on the time domain parameter and/or the Doppler parameter.

In some embodiments, a transmission mode of the channel state information may include various situations. For example, the transmission mode includes at least one of:
(1) Periodic transmission;
(2) Transmitting N times in one period, where N is an integer greater than 0;
(3) Non-periodic transmission;
(4) Semi-persistent transmission.

It should be noted that the steps executed by the terminal in embodiments of the present disclosure can be realized separately to form a new embodiment, and the steps executed by the network device can be realized separately to form a new embodiment.

Embodiments of the present disclosure provides the information reporting method, where the terminal reports the channel state information including the time domain parameter and/or the Doppler domain parameter to the network device, and the time domain parameter and/or the Doppler domain parameter can indicate the coherence time of the channel, so as to determine the time domain correlation of the channel based on the determined coherence time, thus reducing the signaling overhead while improving the CSI feedback accuracy.

Optionally, on the basis of the embodiment shown in Fig. 2, the Doppler domain parameter includes at least one of the following.

### (1) Doppler shift

The Doppler shift corresponds to a numerical value, and the Doppler shift is indicated by the numerical value. For example, the value corresponding to the Doppler shift is indicated by hertz (Hz), or by megahertz (MHz), or by other units.

Or, the Doppler shift corresponds to a CSI-RS index or a CSI-RS set index, that is, the corresponding Doppler shift based on the CSI-RS index or the CSI-RS set index.

Or, the Doppler shift corresponds to the Nth transmission sequence number of a CSI-RS index, that is, the corresponding Doppler shift based on the Nth transmission sequence number of the CSI-RS index.

### (2) Shift coefficient for Doppler shift.

In embodiments of the present disclosure, the terminal can report a plurality of Doppler shifts through the channel state information. Thus, when the terminal reports one Doppler shift, other Doppler shifts can be indicated by the shift coefficient, that is, other Doppler shifts are indicated by the shift coefficient for one Doppler shift.

In some embodiments, the shift coefficient is a numerical value based on the Doppler shift, and other Doppler shifts are determined by the sum of the Doppler shift and the shift coefficient.

### (3) Doppler spread

The Doppler spread is a numerical range. For example, the numerical range is from -fm (a maximum frequency shift value) to fm, which means that the Doppler shift value is within this range. Or, the numerical range is expressed in other ways, which is not limited by embodiments of the present disclosure.

Or, the Doppler spread is a CSI-RS index or a CSI-RS set index, that is, the corresponding Doppler spread based on the CSI-RS index or the CSI-RS set index.

Or, the Doppler spread is the Nth transmission sequence number of a CSI-RS index, that is, the corresponding Doppler spread based on the Nth transmission sequence number of the CSI-RS index.

### (4) First spread coefficient for Doppler spread

In embodiments of the present disclosure, the terminal can report a plurality of Doppler spreads through the channel state information. Thus, in case that the terminal reports one Doppler spread, other Doppler spreads can be indicated by the first spread coefficient, that is, other Doppler spreads are indicated by the first spread coefficient for one Doppler spread.

In some embodiments, the first spread coefficient is a numerical value based on the Doppler spread, and other Doppler spreads are determined by the sum of the Doppler spread and the first spread coefficient.

The method according to embodiments of the present disclosure includes at least one parameter of various parameters in the channel state information, so as to facilitate the network device to determine the channel coherence time of the terminal, thus reducing the feedback overhead while improving the CSI feedback accuracy.

Optionally, based on the embodiment shown in Fig. 2, the time domain parameter includes at least one of the following.

### (1) Doppler delay

The Doppler delay is a delay caused by the Doppler shift. The Doppler delay is expressed in milliseconds, seconds or other units.

Or, the Doppler delay is a CSI-RS index or a CSI-RS set index, that is, the corresponding Doppler delay based on the CSI-RS index or the CSI-RS set index.

Or, the Doppler delay is the Nth transmission sequence number of a CSI-RS index, that is, the corresponding Doppler delay based on the Nth transmission sequence number of the CSI-RS index.

### (2) First delay coefficient for Doppler delay.

In embodiments of the present disclosure, the terminal can report a plurality of Doppler delays through the channel state information. Thus, in case that the terminal reports one Doppler delay, other Doppler delays can be indicated by the first delay coefficient, that is, other Doppler delays are indicated by the first delay coefficient for one Doppler delay.

In some embodiments, the first delay coefficient is a numerical value based on the Doppler delay, and other Doppler delays are determined by the sum of the Doppler delay and the first delay coefficient.

### (3) Average delay

The average delay is a duration required in a process of multipath transmission. The average delay is expressed in milliseconds, seconds or other units.

Or, the average delay is a CSI-RS index or a CSI-RS set index, that is, the corresponding average delay based on the CSI-RS index or the CSI-RS set index.

Or, the average delay is the Nth transmission sequence number of a CSI-RS index, that is, the corresponding average delay based on the Nth transmission sequence number of the CSI-RS index.

### (4) Second delay coefficient for average delay

In embodiments of the present disclosure, the terminal can report a plurality of average delays through the channel state information. Thus, in case that the terminal reports one average delay, other average delays can be indicated by the second delay coefficient, that is, other average delays are indicated by the second delay coefficient for one average delay.

In some embodiments, the second delay coefficient is a numerical value based on the average delay, and other average delays are determined by the sum of the average delay and the second delay coefficient.

### (5) Delay spread

The delay spread is a duration range. The duration range is expressed in seconds, milliseconds or other ways, which is not limited by embodiments of the present disclosure.

Or, the delay spread is a CSI-RS index or a CSI-RS set index, that is, the corresponding delay spread based on the CSI-RS index or the CSI-RS set index.

Or, the delay spread is the Nth transmission sequence number of a CSI-RS index, that is, the corresponding delay spread based on the Nth transmission sequence number of the CSI-RS index.

### (6) Second spread coefficient for delay spread

In embodiments of the present disclosure, the terminal can report a plurality of delay spreads through the channel state information. Thus, in case that the terminal reports one delay spread, other delay spreads can be indicated by the second spread coefficient, that is, other delay spreads are indicated by the second spread coefficient for one delay spread.

In some embodiments, the second spread coefficient is a numerical value based on the delay spread, and other delay spreads are determined by the sum of the delay spread and the second spread coefficient.

It should be noted that embodiments of the present disclosure only take the time domain parameter and/or the Doppler domain parameter as examples for explanations. In another embodiment, the channel state information also includes at least one of the following corresponding to the time domain parameter: a CSI-RS identifier, a CSI-RS resource set identifier and a transmission sequence number corresponding to a CSI-RS; and/or, the channel state information also includes at least one of the following corresponding to the Doppler domain parameter: the CSI-RS identifier, the CSI-RS resource set identifier and the transmission sequence number corresponding to the CSI-RS.

The method according to embodiments of the present disclosure includes at least one parameter of various parameters in the channel state information, so as to facilitate the network device to determine the channel coherence time of the terminal, thus reducing the feedback overhead while improving the CSI feedback accuracy.

On the basis of the embodiment shown in Fig. 2, the channel state information is carried in a PMI, or it can be independent of the PMI.

In some embodiments, the channel state information is carried in the PMI, that is, the channel state information is a part of the PMI, and the PMI reported by the terminal includes the above channel state information.

Optionally, the terminal sends the channel state information corresponding to each wave beam of a plurality of wave beams to the network device. It can also be understood that the above channel state information is independently fed back based on each wave beam.

Each wave beam of the plurality of wave beams can be indicated by at least one CSI-RS port identifier or antenna port identifier.

Optionally, in case that the channel state information is contained in the PMI, the terminal can also send first information to the network device, and the first information includes at least one of a CRI, a RI, a CQI and a LI.

In some embodiments, the PMI includes at least one of an X1 information domain and an X2 information domain.

The X1 information domain includes that i₁ is related to at least one of Ni, O₁, N₂ and O₂, where N₁ is the number of antenna ports in a first dimension, O₁ is the number of oversampling or wave beams in the first dimension, N₂ is the number of antenna ports in a second dimension, and O₂ is the number of oversampling or wave beams in the second dimension).

ii includes amplitude or phase parameters corresponding to different antenna panels or different transmission reception points (TRP) or different transmission points (TP) or different radio remote headers (RRH).

The X2 information domain includes that i₂ includes an amplitude parameter and/or a phase parameter of a narrowband, and a time-frequency space domain resource identifier corresponding to the parameter.

It should be noted that if the channel state information in embodiments of the present disclosure includes at least one coefficient in the above situations, the feedback can be carried out based on the selected wave beam and the correlation coefficient of Doppler shift/Doppler spread/Doppler delay/average delay/delay spread.

In other embodiments, the channel state information exists independently of the PMI, that is, the channel state information is fed back independently of the PMI.

Optionally, the terminal sends the channel state information corresponding to each wave beam of a plurality of wave beams to the network device. It can also be understood that the above channel state information is independently fed back based on each wave beam.

Each wave beam of the plurality of wave beams can be indicated by at least one CSI-RS port identifier or antenna port identifier. Each wave beam can be indicated independently, or each beam is the same as the beam of the PMI.

Optionally, in case that the channel state information is independent of the PMI, the terminal can also send second information to the network device, and the second information includes at least one of a CRI, the PMI, a RI, a CQI and a LI.

It should be noted that if the channel state information in embodiments of the present disclosure includes at least one coefficient in the above situations, the feedback can be carried out based on the selected wave beam and the correlation coefficient of Doppler shift/Doppler spread/Doppler delay/average delay/delay spread.

In some embodiments, the channel state information is carried in a physical uplink control channel (PUCH) and/or a physical uplink shared channel (PUCH).

Optionally, in case that the channel state information is carried in the PUSCH, the PUSCH may be independently configured, or may be a PUSCH carrying at least one of the above CRI, PMI, RI, CQI and LI.

In the solution according to embodiments of the present disclosure, the channel state information is contained in the PMI or independent of the PMI, the time domain parameter and/or the Doppler domain parameter can be reported to the network device in both cases, and the channel state information can be reported in different reporting manners, thus improving the transmission performance.

On the basis of the embodiment shown in Fig. 2, the above channel state information may be fed back based on a broadband or a narrowband.

In some embodiments, the terminal sends the channel state information based on the broadband to the network device.

In other embodiments, the terminal sends the channel state information based on the narrowband to the network device.

The broadband refers to the whole bandwidth, i.e. a wideband. The narrowband refers to dividing the whole bandwidth into a plurality of subbands. In case that the bandwidth is 24-72 physical resource blocks (PRBs), the subband size is 4 or 8 PRBs. In case that the bandwidth is 73-144 PRBs, the subband size is 8 or 16 PRBs. In case that the bandwidth is 145-275 PRBs, the subband size is 16 or 32 PRBs.

Optionally, a frequency domain unit corresponding to the channel state information is the same as a frequency domain unit corresponding to a phase and/or an amplitude of the narrowband.

In embodiments of the present disclosure, the granularity of the frequency domain unit corresponding to the channel state information is larger than the granularity of the frequency domain unit corresponding to the phase and/or the amplitude of the narrowband.

When it is disclosed that the terminal reports the channel state information in the above embodiments, the first information or the second information other than the channel state information can also be reported.

In some embodiments, after the terminal sends the first information to the network device and in case that a preset condition is met, the terminal only sends the channel state information to the network device.

In other embodiments, after the terminal sends the second information to the network device and in case that a preset condition is met, the terminal only sends the channel state information to the network device.

The preset condition is used for instructing that the terminal does not need to send the first information or the second information again after sending the first information or the second information.

In some embodiments, the preset condition includes at least one of the following.
(1) At least one of the CRI and the RI is unchanged.
(2) It is not time to send at least one of the CRI, PMI, RI, CQI and LI.

In embodiments of the present disclosure, in case that the terminal has sent at least one of the CRI, PMI, RI, CQI and LI and the channel state information, that is, the channel state information exists independently of the PMI, and it is not time to send at least one of the next CRI, PMI, RI, CQI and LI, it is not necessary to send at least one of the CRI, PMI, RI, CQI and LI again, and it is only necessary to send the channel state information.

Or, in case that the terminal has already sent at least one of the CRI, PMI, RI, CQI and LI and the channel state information, that is, the channel state information exists independently of the PMI, and at least one of the CRI and the RI has not changed at the time of next reporting, it is not necessary to send at least one of the CRI, PMI, RI, CQI and LI again, and it is only necessary to send the channel state information.

Or, in case that the terminal has sent at least one of the CRI, RI, CQI and LI and the PMI containing the channel state information, and it is not time to send at least one of the next CRI, RI, CQI and LI, it is not necessary to send at least one of the CRI, RI, CQI and LI again, and it is only necessary to send the channel state information.

Or, in case that the terminal has already sent at least one of CRI, RI, CQI and LI and the PMI containing the channel state information, and at least one of CRI and RI has not changed at the time of next reporting, it is not necessary to send at least one of CRI, RI, CQI and LI again, and it is only necessary to send the PMI containing the channel state information.

In the method according to embodiments of the present disclosure, the terminal only needs to send the channel state information in case that the preset condition is met, and does not need to send other information except the channel state information, thus saving the signaling overhead.

It should be noted that the above embodiments can be split into new embodiments or combined with other embodiments into new embodiments, and the present disclosure does not limit the combination between embodiments.

Fig. 3 shows a block diagram of an information reporting apparatus according to an illustrative embodiment of the present disclosure. Referring to Fig. 3, the apparatus includes a sending module 301 configured to send channel state information to a network device, and the channel state information includes a time domain parameter and/or a Doppler domain parameter.

In some embodiments, the Doppler domain parameter includes at least one of: a Doppler shift; a shift coefficient for the Doppler shift; a Doppler spread; and a first spread coefficient for the Doppler spread.

In some embodiments, the time domain parameter includes at least one of: a Doppler delay; a first delay coefficient for the Doppler delay; an average delay; a second delay coefficient for the average delay; a delay spread; and a second spread coefficient for the delay spread.

In some embodiments, the channel state information is contained in a PMI.

In some embodiments, the apparatus further includes that the sending module 301 is configured to send first information to the network device, and the first information includes at least one of a CRI, a RI, a CQI and a LI.

In some embodiments, the channel state information exists independently of a PMI.

In some embodiments, the apparatus further includes that the sending module 301 is configured to send second information to the network device, and the second information includes at least one of a CRI, the PMI, a RI, a CQI and a LI.

In some embodiments, the sending module 301 is further configured to send channel state information corresponding to each wave beam of a plurality of wave beams to the network device.

In some embodiments, the sending module 301 is further configured to: send channel state information based on a broadband to the network device; or, send channel state information based on a narrowband to the network device.

In some embodiments, a frequency domain unit corresponding to the channel state information is the same as a frequency domain unit corresponding to a phase and/or an amplitude of the narrowband; or, a frequency domain unit corresponding to the channel state information is different from a frequency domain unit corresponding to a phase and/or an amplitude of the narrowband.

In some embodiments, the sending module 301 is further configured to send the channel state information to the network device after sending the first information and/or the second information to the network device and in case that a preset condition is met.

In some embodiments, the sending module 301 is further configured to send the channel state information to the network device after sending the second information to the network device and in case that a preset condition is met.

In some embodiments, the preset condition include at least one of the following.

At least one of the CRI and the RI is unchanged.

It is not time to send at least one of the CRI, PMI, RI, CQI and LI.

In some embodiments, the channel state information also includes at least one of the following corresponding to the time domain parameter: a channel state information reference signal CSI-RS identifier, a CSI-RS resource set identifier and a transmission sequence number corresponding to a CSI-RS.

In some embodiments, the channel state information also includes at least one of the following corresponding to the Doppler domain parameter: the channel state information reference signal CSI-RS identifier, the CSI-RS resource set identifier and the transmission sequence number corresponding to the CSI-RS.

It should be noted that the apparatus according to the above embodiments is only explained by taking the division of the above functional modules as an example, when realizing its functions. In practical application, the above functions can be allocated to different functional modules to be completed as required, that is, the internal structure of the apparatus is divided into different functional modules to complete all or part of the functions described above. In addition, the apparatus according to the above embodiments belongs to the same concept as embodiments of the method, and its specific implementation process can be found in the embodiments of the method, which is not repeated here.

Fig. 4 shows a block diagram of an information receiving apparatus according to an illustrative embodiment of the present disclosure. Referring to Fig. 4, the apparatus includes a receiving module 401 configured to receive channel state information sent by a terminal, and the channel state information includes a time domain parameter and/or a Doppler domain parameter.

In some embodiments, the Doppler domain parameter includes at least one of: a Doppler shift; a shift coefficient for the Doppler shift; a Doppler spread; and a first spread coefficient for the Doppler spread.

In some embodiments, the time domain parameter includes at least one of: a Doppler delay; a first delay coefficient for the Doppler delay; an average delay; a second delay coefficient for the average delay; a delay spread; and a second spread coefficient for the delay spread.

In some embodiments, the channel state information is carried in a PMI.

In some embodiments, the receiving module 401 is configured to receive first information sent by the terminal, and the first information includes at least one of a CRI, a RI, a CQI and a LI.

In some embodiments, the channel state information exists independently of a PMI.

In some embodiments, the receiving module 401 is configured to receive second information sent by the terminal, and the second information includes at least one of a CRI, the PMI, a RI, a CQI and a LI.

In some embodiments, the receiving module 401 is configured to receive channel state information corresponding to each wave beam of a plurality of wave beams sent by the terminal.

In some embodiments, the receiving module 401 is configured to: receive channel state information based on a broadband sent by the terminal; or, receive channel state information based on a narrowband sent by the terminal.

In some embodiments, a frequency domain unit corresponding to the channel state information is the same as a frequency domain unit corresponding to a phase and/or an amplitude of the narrowband; or, a frequency domain unit corresponding to the channel state information is different from a frequency domain unit corresponding to a phase and/or an amplitude of the narrowband.

In some embodiments, the receiving module 401 is further configured to receive the channel state information sent by the terminal after the terminal sends the first information to the network device and in case that a preset condition is met.

In some embodiments, the receiving module 401 is further configured to receive the channel state information sent by the terminal after the terminal sends the second information to the network device and in case that a preset condition is met.

In some embodiments, the preset condition includes at least one of the following.

At least one of the CRI and the RI is unchanged.

It is not time to send at least one of the CRI, PMI, RI, CQI and LI.

In some embodiments, the channel state information also includes at least one of the following corresponding to the time domain parameter: a CSI-RS identifier, a CSI-RS resource set identifier and a transmission sequence number corresponding to a CSI-RS.

In some embodiments, the channel state information also includes at least one of the following corresponding to the Doppler domain parameter: the CSI-RS identifier, the CSI-RS resource set identifier and the transmission sequence number corresponding to the CSI-RS.

It should be noted that the apparatus according to the above embodiments is only explained by taking the division of the above functional modules as an example, when realizing its functions. In practical application, the above functions can be allocated to different functional modules to be completed as required, that is, the internal structure of the apparatus is divided into different functional modules to complete all or part of the functions described above. In addition, the apparatus according to the above embodiments belongs to the same concept as embodiments of the method, and its specific implementation process can be found in the embodiments of the method, which is not repeated here.

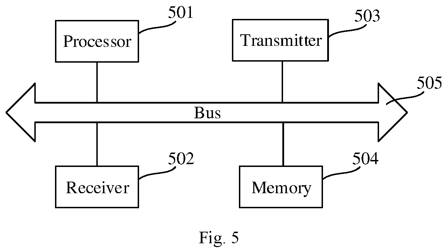

Fig. 5 shows a schematic diagram of a communication device according to an illustrative embodiment of the present disclosure. The communication device includes a processor 501, a receiver 502, a transmitter 503, a memory 504 and a bus 505.

The processor 501 includes one or more processing cores, and the processor 501 executes various functional applications and information processing by running software programs and modules.

The receiver 502 and the transmitter 503 can be realized as one communication component, which can be a communication chip.

The memory 504 is connected to the processor 501 through the bus 505.

The memory 504 can be used to store at least one program code, and the processor 501 is used to execute the at least one program code, so as to realize the steps in the above embodiments of the method.

In addition, the communication device can be a terminal or a network device. The memory 504 can be realized by any type of volatile or nonvolatile memory devices or their combination, including but not limited to: a magnetic disk or an optical disk, an electrically erasable programmable read-only memory (EEPROM), an erasable programmable read-only memory (EPROM), a static random access memory (SRAM), a read-only memory (ROM), a magnetic memory, a flash memory and a programmable read-only memory (PROM).

In an illustrative embodiment, a computer-readable storage medium is also provided, in which an executable program code is stored, and the executable program code is loaded and executed by a processor to realize the information reporting method executed by the communication device according to the above embodiments of the method.

In an illustrative embodiment, a chip is provided, which includes a programmable logic circuit and/or program instructions, and when the chip runs on a terminal or a network device, it is used to realize the information reporting method according to the above embodiments of the method.

In an illustrative embodiment, a computer program product is provided, and when the computer program product is executed by a processor of a terminal or a network device, it is used to realize the information reporting methods according to the above embodiments of the method.

Those skilled in the art can understand that the realization of all or part of the steps of the above embodiments can be completed by hardware, or by instructing related hardware through a program, the program can be stored in a computer-readable storage medium, and the above storage medium can be a read-only memory, a magnetic disk or an optical disk, etc.

The above description only relates to optional embodiments of the present disclosure, and is not used to limit the present disclosure. Any modification, equivalent substitution, improvement, etc. made within the spirit and principle of the present disclosure should be included in the protection scope of the present disclosure.

## Claims

1. An information reporting method, executed by a terminal, and comprising:
sending channel state information to a network device, wherein the channel state information comprises a time domain parameter and/or a Doppler domain parameter.

2. The method according to claim 1, wherein the Doppler domain parameter comprises at least one of:
a Doppler shift;
a shift coefficient for the Doppler shift;
a Doppler spread; and
a first spread coefficient for the Doppler spread.

3. The method according to claim 1, wherein the time domain parameter comprises at least one of:
a Doppler delay;
a first delay coefficient for the Doppler delay;
an average delay;
a second delay coefficient for the average delay;
a delay spread; and
a second spread coefficient for the delay spread.

4. The method according to claim 1, wherein the channel state information is carried in a precoding matrix indicator PMI.

5. The method according to claim 4, further comprising:
sending first information to the network device, wherein the first information comprises at least one of a channel state information reference signal resource indicator CRI, a rank indicator RI, a channel quality indicator CQI and a layer indicator LI.

6. The method according to claim 1, wherein the channel state information exists independently of a PMI.

7. The method according to claim 6, further comprising:
sending second information to the network device, wherein the second information comprises at least one of a CRI, the PMI, a RI, a CQI and a LI.

8. The method according to claim 4 or 6, wherein sending the channel state information to the network device comprises:
sending channel state information corresponding to each wave beam of a plurality of wave beams to the network device.

9. The method according to claim 1, wherein sending the channel state information to the network device comprises:
sending channel state information based on a broadband to the network device; or
sending channel state information based on a narrowband to the network device.

10. The method according to claim 9, wherein a frequency domain unit corresponding to the channel state information is the same as a frequency domain unit corresponding to a phase and/or an amplitude of the narrowband; or
a frequency domain unit corresponding to the channel state information is different from a frequency domain unit corresponding to a phase and/or an amplitude of the narrowband.

11. The method according to claim 5, further comprising:
sending the channel state information to the network device after sending the first information to the network device and in case that a preset condition is met.

12. The method according to claim 7, further comprising:
sending the channel state information to the network device after sending the second information to the network device and in case that a preset condition is met.

13. The method according to claim 11 or 12, wherein the preset condition comprises at least one of:
at least one of the CRI and the RI being unchanged; and
it not being time to send at least one of the CRI, PMI, RI, CQI and LI.

14. The method according to any one of claims 1-13, wherein the channel state information further comprises at least one of the following corresponding to the time domain parameter: a channel state information reference signal CSI-RS identifier, a CSI-RS resource set identifier and a transmission sequence number corresponding to a CSI-RS.

15. The method according to claim 14, wherein the channel state information further comprises at least one of the following corresponding to the Doppler domain parameter: the CSI-RS identifier, the CSI-RS resource set identifier and the transmission sequence number corresponding to the CSI-RS.

16. An information receiving method, executed by a network device and comprising:
receiving channel state information sent by a terminal, wherein the channel state information comprises a time domain parameter and/or a Doppler domain parameter.

17. The method according to claim 16, wherein the Doppler domain parameter comprises at least one of:
a Doppler shift;
a shift coefficient for the Doppler shift;
a Doppler spread; and
a first spread coefficient for the Doppler spread.

18. The method according to claim 16, wherein the time domain parameter comprises at least one of:
a Doppler delay;
a first delay coefficient for the Doppler delay;
an average delay;
a second delay coefficient for the average delay;
a delay spread; and
a second spread coefficient for the delay spread.

19. The method according to claim 16, wherein the channel state information is carried in a PMI.

20. The method according to claim 19, further comprising:
receiving first information sent by the terminal, wherein the first information comprises at least one of a CRI, a RI, a CQI and a LI.

21. The method according to claim 16, wherein the channel state information exists independently of a PMI.

22. The method according to claim 21, further comprising:
receiving second information sent by the terminal, wherein the second information comprises at least one of a CRI, the PMI, a RI, a CQI and a LI.

23. The method according to claim 19 or 21, wherein receiving the channel state information sent by the terminal comprises:
receiving channel state information corresponding to each wave beam of a plurality of wave beams sent by the terminal.

24. The method according to claim 16, wherein receiving the channel state information sent by the terminal comprises:
receiving channel state information based on a broadband sent by the terminal; or
receiving channel state information based on a narrowband sent by the terminal.

25. The method according to claim 24, wherein a frequency domain unit corresponding to the channel state information is the same as a frequency domain unit corresponding to a phase and/or an amplitude of the narrowband; or
a frequency domain unit corresponding to the channel state information is different from a frequency domain unit corresponding to a phase and/or an amplitude of the narrowband.

26. The method according to claim 20, further comprising:
receiving the channel state information sent by the terminal after the terminal sends the first information to the network device and in case that a preset condition is met.

27. The method according to claim 22, further comprising:
receiving the channel state information sent by the terminal after the terminal sends the second information to the network device and in case that a preset condition is met.

28. The method according to claim 26 or 27, wherein the preset condition comprises at least one of:
at least one of the CRI and the RI being unchanged; and
it not being time to send at least one of the CRI, PMI, RI, CQI and LI.

29. The method according to any one of claims 16-28, wherein the channel state information further comprises at least one of the following corresponding to the time domain parameter: a CSI-RS identifier, a CSI-RS resource set identifier and a transmission sequence number corresponding to a CSI-RS.

30. The method according to claim 29, wherein the channel state information further comprises at least one of the following corresponding to the Doppler domain parameter: the CSI-RS identifier, the CSI-RS resource set identifier and the transmission sequence number corresponding to the CSI-RS.

31. An information reporting apparatus, comprising:
a sending module configured to send channel state information to a network device, wherein the channel state information comprises a time domain parameter and/or a Doppler domain parameter.

32. An information receiving apparatus, comprising:
a receiving module configured to receive channel state information sent by a terminal, wherein the channel state information comprises a time domain parameter and/or a Doppler domain parameter.

33. A terminal, comprising:
a processor; and
a transceiver connected with the processor,
wherein the processor is configured to load and execute executable instructions to realize the information reporting method according to any one of claims 1 to 15.

34. A network device, comprising:
a processor; and
a transceiver connected with the processor,
wherein the processor is configured to load and execute executable instructions to realize the information receiving method according to any one of claims 16 to 30.

35. A computer-readable storage medium, in which an executable program code is stored, wherein the executable program code is loaded and executed by a processor to realize the information reporting method according to any one of claims 1 to 15, or to realize the information receiving method according to any one of claims 16 to 30.

36. A computer program product, which, when executed by a processor of a terminal or of a network device, is configured to realize the information reporting method according to any one of claims 1 to 15, or to realize the information receiving method according to any one of claims 16 to 30.
